# EUROPEAN PATENT APPLICATION

(11) **EP 3 196 256 A1**
(43) Date of publication of application: **26.07.2017**
(21) Application number: 15841227.0
(22) Date of filing: 16.09.2015
(51) Int. Cl.: C08L 97/00, C08K 5/17, C08K 5/29, C08L 61/04, C08L 63/00

(54) **THERMOSETTING RESIN COMPOSITION**

(30) Priority: 17.09.2014 JP 2014189287
(71) Applicant: Idemitsu Kosan Co., Ltd, Tokyo 100-8321 (JP); National University Corporation Hokkaido University, Sapporo-shi, Hokkaido 060-0808 (JP)
(72) Inventor: YAMAO, Shinobu, Ichihara-shi Chiba 299-0193 (JP); KOYAMA, Yoshihito, Sodegaura-shi Chiba 299-0293 (JP); MASUDA, Takao, Sapporo-shi Hokkaido 060-0808 (JP); TAGO, Teruoki, Sapporo-shi Hokkaido 060-0808 (JP)
(74) Representative: Hoffmann Eitle
(86) International application number: PCT/JP2015/076280
(87) International publication number: WO 2016/043218

(57) **Abstract**

A thermosetting resin composition according to the present invention contains: purified lignin obtained by treating a herbaceous biomass as a raw material under the following conditions in a first solvent that is a mixed solvent of water and at least one type of alcohol selected from aliphatic alcohols having 4 to 8 carbon atoms, subsequently removing the alcohol from the alcohol phase that is separated at the temperature at which the first solvent separates into two phases to give lignin, adding a second solvent that is an organic solvent alone or a mixed solvent of the organic solvent and water to the resultant lignin, and removing the second solvent from the solution in which the lignin is dissolved in the second solvent; and a lignin-reactive compound that has a functional group capable of reacting with the purified lignin. Condition A: the concentration of the raw material to be charged into the mixed solvent is 1% by mass or more and 50% by mass or less. Condition B: the treatment temperature is 100°C or higher and 350°C or lower. Condition C: the treatment time is 0.1 hours or more and 10 hours or less.

## Description

### Technical Field

The present invention relates to a thermosetting resin composition containing purified lignin obtained using a herbaceous biomass as a raw material and a lignin-reactive compound having a functional group capable of reacting with the purified lignin.

### Background Art

Due to a recent increase in environmental consciousness, a raw material derived from a biomass has been desired. However, for example, as is especially noticeable in the production of bioethanol, as the raw material derived from a biomass, a raw material such as starch or sugar that competes with foods is used in many cases and accordingly, there has been pointed out such problems that the use leads to an increase in food prices and a decrease in food production or the like. Therefore, attention has been currently attracted to a technique for producing a raw material from a cellulosic biomass that does not compete with foods.

The cellulosic biomass includes, for example, trunks and empty fruit bunches of palm, fibers and seeds of palm fruits, bagasse (strained lees of sugar cane (including high biomass content sugar cane)), rice straws, wheat straws, cobs of corn, corn stems and leaves, corn residues (corn stovers, corn cobs, corn hulls), sorghum (including sweet sorghum) residues, Jatropha seed coats and hulls, cashews hulls, wood chips, switchgrass, Erianthus, energy crops, etc. These cellulosic biomasses all contain lignin in addition to cellulose and hemicellulose that can be converted into sugar.

Usually, lignin is separated from cellulose, hemicellulose and the like in the stage of pre-treatment and saccharification treatment and remains as a solid residue. Lignin remaining as a residue is currently effectively utilized by using it as a fuel. However, since phenol derivatives can be produced from lignin, it is desired to convert it into chemical products and further bioplastics.

Consequently, the following techniques have been proposed. Japanese Patent No. 5256813 discloses a resin composition containing a lignin compound, which is obtained by subjecting a biomass to stirring treatment in water under high temperature and high pressure, and a crosslinking agent (hexamethylenetetramine).

JP 2012-82255 A discloses a lignin-added thermosetting resin containing herbaceous lignin extracted from a black liquor or the like discharged from pulp production process by a soda method (alkali digestion method) using a herbaceous biomass as a raw material and a thermosetting resin (phenol resin).

JP 2013-035885 A discloses physical properties and a composition of lignin obtained by extracting soda lignin from a black liquor or the like discharged from pulp production process by the soda method (alkali digestion method) using a herbaceous biomass as a raw material and further extracting a soluble fraction from the soda lignin with an aliphatic monoalcohol.

WO11/099544 discloses a resin composition containing organic solvent-soluble lignin obtained by treating a biomass by a steam blasting method and a curing agent (epoxy resin, isocyanate), and a molded body.

### Summary of Invention

### Technical Problem

As described above, techniques for converting lignin into chemical products and bioplastics have been proposed but, also in the techniques described above, further improvement has been demanded.

In the technique of Japanese Patent No. 5256813, it is necessary to extract lignin from a bulky water-insoluble fraction using a large amount of an organic solvent after the treatment with high-temperature and high-pressure water. Since the step after the treatment with high-temperature and high-pressure water is complicated, the technique is insufficient in energy saving ability.

In the technique of JP 2012-82255 A, a neutralization step for recovering lignin is necessary. In the technique, since a recovering path of the base after the neutralization step is complicated, it is not an energy saving and efficient method. Further, in the technique, impurities derived from the base are prone to mix into lignin and thus there is a concern of occurrence of corrosion or the like of a mold for use in processing after lignin is mixed with a resin composition, so that base-resistant reaction facilities are needed.

In the technique of JP 2013-035885 A, the yield of soluble fraction of soda lignin is high but the melting point of the soda lignin is high and hence there is a concern of occurrence of a problem when it is mixed with a resin composition.

Further, in WO11/099544, it is necessary to extract lignin from the bulky water-insoluble fraction using a large amount of an organic solvent after the steam blasting treatment. Since the step after the steam blasting treatment is complicated, the method of WO11/099544 is not an energy saving and efficient method. Further, since it involves steam blasting, a facility cost higher than usual solvent treatment is needed for securing safety.

Accordingly, an object of the present invention is to provide a thermosetting resin composition having good processability, strength and heat resistance by efficiently obtaining purified lignin from a herbaceous lignin-containing material in an energy saving manner and using the purified lignin.

### Solution to Problem

According to the present invention, there is provided a thermosetting resin composition containing:
purified lignin obtained by treating a herbaceous biomass as a raw material under the following conditions in a first solvent that is a mixed solvent of water and at least one type of alcohol selected from aliphatic alcohols having 4 to 8 carbon atoms, subsequently removing the alcohol from the alcohol phase that is separated at the temperature at which the first solvent separates into two phases to give lignin, adding a second solvent that is an organic solvent alone or a mixed solvent of the organic solvent and water to the resultant lignin, and removing the second solvent from the solution in which the lignin is dissolved in the second solvent and
a lignin-reactive compound that has a functional group capable of reacting with the purified lignin.
   Condition A: the concentration of the raw material to be charged into the mixed solvent is 1% by mass or more and 50% by mass or less,
   Condition B: the treatment temperature is 100°C or higher and 350°C or lower, and
   Condition C: the treatment time is 0.1 hours or more and 10 hours or less.

In the present invention, a state of separating into two phases includes a state where almost the whole mixed solvent separates into two phases but the aqueous phase and the alcohol phase slightly dissolve each other. The treatment of removing the alcohol from the alcohol phase also includes a treatment of removing the aqueous phase that slightly dissolves in the alcohol phase.

### Advantageous Effects of Invention

According to the present invention, a thermosetting resin composition having good processability, strength and heat resistance can be provided by effectively obtaining purified lignin from a herbaceous lignin-containing material in an energy saving manner and using the purified lignin.

### Brief Description of the Drawings

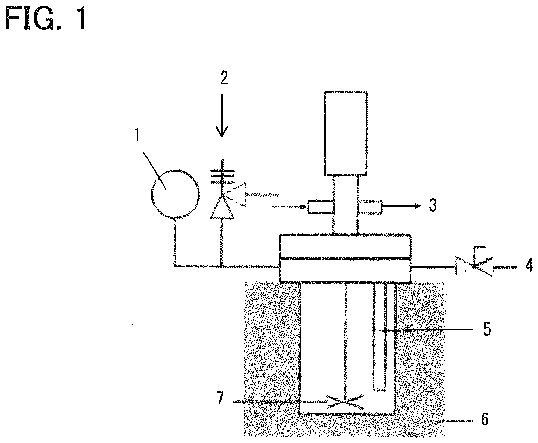

Fig. 1 is a view showing a batch reaction apparatus used in Examples and Comparative Examples.

### Description of Embodiments

The following will explain the thermosetting resin composition according to embodiments of the present invention.

### [Thermosetting Resin Composition]

The thermosetting resin composition according to the present embodiment contains:
purified lignin obtained by treating a herbaceous biomass as a raw material under the following conditions in a first solvent that is a mixed solvent of water and at least one type of alcohol selected from aliphatic alcohols having 4 to 8 carbon atoms, subsequently removing the alcohol from the alcohol phase that is separated at the temperature at which the first solvent separates into two phases to give lignin, adding a second solvent that is an organic solvent alone or a mixed solvent of the organic solvent and water to the resultant lignin, and removing the second solvent from the solution in which the lignin is dissolved in the second solvent and
a lignin-reactive compound that has a functional group capable of reacting with the purified lignin.

The above-described conditions are as described below:
Condition A: the concentration of the raw material to be charged into the mixed solvent is 1% by mass or more and 50% by mass or less,
Condition B: the treatment temperature is 100°C or higher and 350°C or lower, and
Condition C: the treatment time is 0.1 hours or more and 10 hours or less.

The definition of purified lignin in the present embodiment will be described later. Also, a method for producing purified lignin to be contained in the thermosetting resin composition according to the present embodiment will be described later in detail. Subsequently, lignin, purified lignin and the lignin-reactive compound will be described.

### <Lignin>

In the present embodiment, lignin is one obtained by performing a treatment under the aforementioned conditions A to C using the aforementioned first solvent that is a mixed solvent of water and an alcohol and subsequently removing the alcohol from the alcohol phase resulting from liquid separation of the first solvent.

### <Purified Lignin>

In the present embodiment, purified lignin is one obtained by adding a second solvent that is an organic solvent alone or a mixed solvent of the organic solvent and water to the lignin obtained by removing the alcohol from the alcohol phase resulting from liqui-liquid separation of the first solvent and removing the second solvent from the solution in which the lignin is dissolved in the second solvent.

Purified lignin has a weight-average molecular weight of 500 or more and less than 5000, the weight-average molecular weight being measured on gel permeation chromatograph (GPC) (measurement temperature: 40°C, detector: RI) using a tetrahydrofuran solvent. The weight-average molecular weight is represented as Mw and is a weight-average molecular weight in terms of polystyrene.

Mw of purified lignin is preferably 1000 or more and less than 5000, more preferably 1200 or more and less than 5000, and even more preferably 1400 or more and less than 5000.

The softening point of purified lignin is a value measured using a testing machine according to a ring and ball method in accordance with JIS K2207 and is 20°C or higher and lower than 130°C, preferably 20°C or higher and lower than 125°C, and more preferably 20°C or higher and lower than 120°C.

Even when Mw is 500 or more and less than 5000, moldability decreases in the case where the softening point is 130°C or higher. Even when the softening point is 20°C or higher and lower than 120°C, strength and heat resistance decrease in the case where Mw is less than 500.

The melt viscosity of purified lignin is, as a value measured at a temperature of 140°C at a shear rate of 0.1 s⁻¹ by a parallel plate method (φ=25 mm, gap: 1mm) using a rheometer (Anton Paar Inc., MCR301) apparatus, 10 poises or more and 500 poises or less, preferably 20 poises or more and 200 poises or less, more preferably 30 poises or more and 200 poises or less. When the melt viscosity of purified lignin falls within the aforementioned range, the resin composition is excellent in kneading ability and moldability.

### <Lignin-Reactive Compound>

The lignin-reactive compound to be contained in the thermosetting resin composition according to the present embodiment is a compound having a functional group capable of reacting with purified lignin. Since purified lignin has a phenolic structural unit, it can be applied as a base resin raw material for phenol resins, epoxy resins and the like, an additive (curing agent) for epoxy resins, and the like.

From the above viewpoint, as the compound having a functional group capable of reacting with purified lignin, there may be mentioned a compound generating an electrophilic substitution reaction with a phenol compound, a compound having an epoxy group, a compound having an isocyanate group, and the like.

### (Compound Generating Electrophilic Substitution Reaction with Phenol Compound)

The compound generating an electrophilic substitution reaction with a phenol compound includes formaldehyde, formaldehyde-affording curing agent compounds, formaldehyde-equivalent compounds and the like. Commercially, hexamethylenetetramine, hexaformaldehyde and paraformaldehyde can be used.

In order to enhance the curing rate and curing degree, there may be used a catalyst, e.g., an inorganic base such as calcium hydroxide, sodium hydroxide or potassium hydroxide, or calcium oxide or magnesium oxide, a Lewis acid such as zince chloride or zinc acetate, or an amine such as triethylamine.

### (Compound Having Epoxy Group)

The compound having an epoxy group belongs to a category referred to as so-called an epoxy resin. Examples thereof include glycidyl ether-based epoxy resins synthesized from epichlorohydrin or the like and a compound having two or more hydroxyl groups in a molecule, such as 2,2-bis(4'-hydroxyphenyl)propane (referred to as bisphenol A), bis(2-hydroxyphenyl)methane (referred to as bisphenol F), 4,4'-dihydroxydiphenyl sulfone (referred to as bisphenol S), 4,4'-dihydroxybiphenyl, resorcin, saligenin, trihydroxydiphenyldimethylmethane, tetraphenylolethane, a halogen-substituted or an alkyl-substituted derivative thereof, butanediol, ethylene glycol, erythritol, novolak, glycerine, or polyoxyalkylene; glycidyl ester-based epoxy resins synthesized from the compound having two or more hydroxyl groups in a molecule and phthalic acid glycidyl ester or the like; epoxy resins containing a glycidyl group such as glycidyl amine-based epoxy resins synthesized from a primary or secondary amine such as aniline, diaminodiphenylmethane, meta-xylenediamine, or 1,3-bisaminomethylcyclohexane and epichlorohydrin or the like; epoxy resins not containing a glycidyl group, such as epoxidized soybean oil, epoxidized polyolefins, vinylcyclohexene dioxide and dicyclopentadiene dioxide. Among them, cresol novolak type and phenol novolak type epoxy resins having a chemical structure similar to lignin and a good compatibility are preferred.

Also, commercially available products to be preferably used include "iER 828" manufactured by Mitsubishi Chemical Corporation and "EPICLON N695" manufactured by DIC Corporation.

### (Compound Having Isocyanate Group)

The compound having an isocyanate group is a polyisocyanate or one obtained by reacting a polyisocyanate and a polyol. The polyisocyanate includes aromatic polyisocyanates such as tolylene diisocyanate (TDI), 4,4'-diphenylmethane diisocyanate (MDI), polymeric MDI (MDI-CR) and carbodiimide-modified MDI (liquid MDI) and aliphatic polyisocyanates such as norbornane diisocyanate (NBDI), isophorone diisocyanate (IPDI), hexamethylene diisocyanate (HDI), 4,4'-methylene-bis(cyclohexyl isocyanate) (hydrogenated MDI) and xylylene diisocyanate (XDI), blocked isocyanates, and the like. Among them, it is preferable to use tolylene diisocyanate (TDI) or 4,4'-diphenylmethane diisocyanate (MDI).

### <Other Resin Components>

The thermosetting resin composition according to the present embodiment may contain, in addition to purified lignin and the lignin-reactive compound, a resin such as a phenol resin, a urea resin, a melamine resin, a silicone resin, an unsaturated polyester resin, an alkyd resin, and/or a polyurethane resin.

Among the resins, similarly to purified lignin, a phenol resin has a phenolic hydroxyl group, can react with the lignin-reactive compound and can be also used as a diluent for purified lignin, and therefore the resin is preferred.

### [Content of Each Component Constituting Thermosetting Resin Composition]

### <Case where Phenol Compound and Compound that Generates Electrophilic Substitution Reaction Are Contained>

The lignin-reactive compound to be contained in the thermosetting resin composition according to the present embodiment may be a compound that generates an electrophilic substitution reaction with a phenol compound. As an example, in the case of hexamethylenetetramine, purified lignin and hexamethylenetetramine are preferably contained in a blending amount described below.

That is, in the thermosetting resin composition, it is preferable that the purified lignin is contained in an amount of 50% by mass or more and 98% by mass or less on the basis of the total mass of the thermosetting resin composition, and the hexamethylenetetramine is contained in an amount of 2% by mass or more and 50% by mass or less on the basis of the total mass of the thermosetting resin composition. When hexamethylenetetramine is in the above range, a cured product having good appearance and physical properties is obtained. From this viewpoint, hexamethylenetetramine is contained in the thermosetting resin composition in an amount of more preferably 5% by mass or more and 30% by mass or less, even more preferably 10% by mass or more and 20% by mass or less on the basis of the total mass of the thermosetting resin composition.

Also, the thermosetting resin composition according to the present embodiment may further contain a phenol resin in addition to purified lignin and hexamethylenetetramine. As mentioned above, since purified lignin has a phenolic structural unit, the phenol resin can be used as a diluent for purified lignin, an extender, and the like in a range where physical properties such as processability, strength and heat resistance of the thermosetting resin composition are not lowered.

In the case where the phenol resin is contained, it is preferable that a resin mixture containing purified lignin in an amount of 10% by mass or more and 90% by mass or less and the phenol resin in an amount of 10% by mass or more and 90% by mass or less is contained in an amount of 50% by mass or more and 98% by mass or less on the basis of the total mass of the thermosetting resin composition, and the hexamethylenetetramine is contained in an amount of 2% by mass or more and 50% by mass or less on the basis of the total mass of the thermosetting resin composition.

### <Case where Compound Containing Epoxy Group Is Contained>

In the case where the lignin-reactive compound to be contained in the thermosetting resin composition according to the present embodiment is a compound containing an epoxy group, an equivalent ratio of the phenolic hydroxyl groups in the purified lignin to the epoxy groups in the epoxy resin (phenolic hydroxyl groups/epoxy groups) is preferably 0.7 or more and 1.3 or less.

When phenolic hydroxyl groups/epoxy groups is close to 1, an unreacted fraction of either of the functional groups decreases, the appearance is good, and strength is easily maintained. From this viewpoint, phenolic hydroxyl groups/epoxy groups in purified lignin is more preferably 0.8 or more and 1.2 or less, even more preferably 0.9 or more and 1.1 or less.

Further, the thermosetting resin composition according to the present embodiment may further contain a phenol resin in addition to purified lignin and the compound containing an epoxy group. In the case where the phenol resin is contained, an equivalent ratio of the phenolic hydroxyl groups in a resin mixture containing the purified lignin in an amount of 10% by mass or more and 90% by mass or less and the phenol resin in an amount of 10% by mass or more and 90% by mass or less to the epoxy groups in the epoxy resin (total of phenolic hydroxyl groups/epoxy groups) is preferably 0.7 or more and 1.3 or less.

Upon calculating the equivalent ratio, for the phenolic hydroxyl group content, the epoxy group content, and the alcoholic hydroxyl group content to be described later in each of the components constituting the thermosetting resin composition, the results from independent measurements may be used or numerical values in an analysis table of a component inspection result sheet or the like presented by the manufacturer of each component may be used.

For example, the epoxy group content can be determined by a measurement method in accordance with "a method for determining an epoxy equivalent of an epoxy resin" in JIS K7236 (2001).

Further, for example, the phenolic hydroxyl group content and the alcoholic hydroxyl group content of purified lignin can be measured as follows.

A solvent obtained by mixing deuterated chloroform, pyridine and cyclohexanol (internal standard) is added to purified lignin, and 2-chloro-4,4,5,5-tetramethyl-1,3,2-dioxaphospholane as a derivatization reagent is further added thereto, followed by heating at 50°C for 1 hour. Thereafter, ³¹PNMR measurement is carried out under the following measurement conditions.
- Pulse width: 30°
- Repeating time: 2 seconds
- Measurement range: -60 to 200 ppm
- Integration times: 200 times

A signal derived from cyclohexanol that is internal standard being 145.2ppm, a range of 150.0 to 145.5 ppm is attributed to aliphatic hydroxyl groups (alcoholic hydroxyl groups) (Alc-OH) and a range of 144.7 to 136.6 ppm is attributed to aromatic hydroxyl groups (phenolic hydroxyl groups) (Ph-OH). Then, the alcoholic hydroxyl group content (mol/g) and the phenolic hydroxyl group content (mol/g) are calculated from the integrated values.

In the case where the lignin-reactive compound contained in the thermosetting resin composition according to the present embodiment is a compound containing an epoxy group, a curing accelerator may be appropriately added depending on the purpose of the curing reaction acceleration. Specific examples include imidazoles such as 2-methylimidazole, 2-ethylimidazole and 2-ethyl-4-methylimidazole, tertiary amines such as 2-(dimethylaminomethyl)phenol and 1,8-diaza-bicyclo(5,4,0)undecene-7, phosphines such as triphenylphosphine, quaternary ammonium salts such as tetrabutylammonium salts, triisopropylmethylammonium salts, trimethyldecanylammonium salts and cetyltrimethylammonium salts, quaternary phosphonium salts such as triphenylbenzylphosphonium salt, triphenylethylphosphonium salt and tetrabutylphosphonium salt, metal compounds such as tin octylate, and the like. The counter ion of the quaternary phosphonium salt includes a halogen, an organic acid ion, a hydroxide ion and the like and, in particular, an organic acid ion and a hydroxide ion are preferred.

The curing accelerator is preferably contained in the thermosetting resin composition in an amount of 0.1 parts by mass or more and 10 parts by mass or less relative to 100 parts by mass of the thermosetting resin composition. When the content of the curing accelerator falls within the above range, reactivity is excellent and heat resistance and strength are also excellent. From this viewpoint, the content of the curing accelerator is more preferably 0.3 parts by mass or more and 5 parts by mass or less, even more preferably 0.5 parts by mass or more and 3 parts by mass or less.

### <Case where Isocyanate Compound Is Contained>

In the case where the lignin-reactive compound contained in the thermosetting resin composition according to the present embodiment is an isocyanate compound, the equivalent ratio of the total of the phenolic hydroxyl groups and the alcoholic hydroxyl groups in the purified lignin to the isocyanate groups in the isocyanate compound (total of phenolic hydroxyl groups and alcoholic hydroxyl groups/isocyanate groups) is preferably 0.8 or more and 1.2 or less. When total of phenolic hydroxyl groups and alcoholic hydroxyl groups/isocyanate groups falls within the above range, the amount of unreacted group of either of the functional groups decreases and defective phenomena with regard to curing rate, appearance and physical properties decrease.

From this viewpoint, the equivalent ratio of the total of the phenolic hydroxyl groups and the alcoholic hydroxyl groups in purified lignin to the isocyanate groups in the isocyanate compound (total of phenolic hydroxyl groups and alcoholic hydroxyl groups/isocyanate groups) is more preferably 0.85 or more and 1.15 or less, even more preferably 0.9 or more and 1.1 or less.

Here, the total of the phenolic hydroxyl groups and the alcoholic hydroxyl groups in purified lignin can be calculated based on the numerical values determined by the already-mentioned method or the numerical values to be determined by a measurement method in accordance with "Test methods of acid values, saponification values, ester values, iodine values, hydroxyl values and unsaponified substances of chemical products" of JIS K0070 (1992), "Test method of plastic-polyurethane raw material polyol - part 1: Determination method of hydroxyl values" of JIS K1557-1 (2007), etc.

For the isocyanate group content in the isocyanate compound, the results from independent measurements may be used or numerical values in an analysis table of a component inspection result sheet or the like presented by the manufacturer of each component may be used. As a measurment method for the isocyanate group content in the isocyanate compound, for example, "Test method of plastic-polyurethane raw material polyol - part 1: Determination method of isocyanate group content" of JIS K1603-1 (2007) may be mentioned.

The thermosetting resin composition according to the present embodiment may further contain a phenol resin in addition to purified lignin and the isocyanate compound. In the case where the phenol resin is contained, the equivalent ratio of the total of the phenolic hydroxyl groups and the alcoholic hydroxyl groups in a resin mixture containing purified lignin in an amount of 10% by mass or more and 90% by mass or less and the phenol resin in an amount of 10% by mass or more and 90% by mass or less to the isocyanate groups in the isocyanate compound (total of phenolic hydroxyl groups and alcoholic hydroxyl groups/isocyanate groups) is preferably 0.8 or more and 1.2 or less.

A curing accelerator can be appropriately added to the thermosetting resin composition according to the present embodiment depending on the purpose of curing reaction acceleration. The curing accelerator includes, for example, organometallic catalysts of zirconium, aluminum and the like, dibutyltin laurate, a phenol salt of DBU, octylic acid salts, amines, imidazoles and the like. In view of colorability, organometallic catalysts, for example, aluminum sec-butylate, ethyl acetoacetate aluminum di-isopropylate, zirconium tributoxy acetylacetonate and zirconium tetraacetylacetonate are particularly preferred. The amount of the curing accelerator is preferably from 0.001 parts by mass or more and 1.0 parts by mass or less, even more preferably 0.05 parts by mass or more and 0.5 parts by mass or less relative to 100 parts by mass of the thermosetting resin composition.

### <Inorganic filler, Organic filler>

The inorganic filler to be contained in the thermosetting resin composition according to the present embodiment includes, for example, spherical or crushed fused silica, silica powder of crystalline silica or the like, alumina powder, glass powder, or mica, talc, calcium carbonate, alumina, hydrated alumina, boron nitride, aluminum nitride, silicon nitride, silicon carbide, titanium nitride, zinc oxide, tungsten carbide, magnesium oxide and the like.

The organic filler includes carbon fibers, aramid fibers, paper dust, cellulose fibers, cellulose powder, chaff powder, fruit shell, nut flour, chitin powder, starch powder and the like.

The inorganic filler and the organic filler may be contained singly or as a combination of a plurality thereof and the content thereof is determined depending on the purpose. In the case where at least one selected from the group consisting of the inorganic fillers and the organic fillers is contained, it is desirable that the content of at least one selected from the group consisting of the inorganic fillers and the organic fillers is a suitable amount in order to obtain good physical properties and moldability. From this viewpoint, the upper limit value of the content of at least one selected from the group consisting of the inorganic fillers and the organic fillers is preferably more than 0 parts by mass and 400 parts by mass or less, more preferably 10 parts by mass or more and 300 parts by mass or less, even more preferably 20 parts by mass or more and 250 parts by mass or less relative to 100 parts by mass of the resin fraction in the thermosetting resin composition.

### <Other Additives>

To the thermosetting resin composition according to the present embodiment, various types of additives can be further added depending on the purpose within the range where the properties of the resulting cured product are not impaired. The additives include flexibilizing agents, heat stabilizers, ultraviolet absorbers, flame retardants, antistatic agents, defoamers, thixotropy-imparting agents, release agents, antioxidants, plasticizers, stress-reducing agents, coupling agents, dyes, light-scattering agents, a small amount of a thermoplastic resin and the like.

### [Production Method of Purified Lignin]

The production method of purified lignin to be contained in the thermosetting resin composition according to the present embodiment is as follows. That is, the production method of purified lignin includes a separation step, a liquid separation step, a removal step and an extraction step.

### <Raw Material>

In the production method of purified lignin, it is required to use, as a raw material, a herbaceous biomass or a residue or the like that has generated in the process of producing bioethanol, biobutanol, biochemicals, or the like from cellulose and hemicellulose in the herbaceous biomass. The herbaceous biomass raw material that is introduced into the production step may be a ground one. The herbaceous biomass may be in any form of blocks, chips or powders.

The herbaceous biomass includes bamboo, trunks of palm, empty fruit bunches of palm, fibers and seeds of palm fruits, bagasse (strained lees of sugar cane and high biomass content sugar cane), cane top (sugar cane top and leaves), energy cane, rice straws, wheat straws, cobs of corn, corn stems and leaves, corn residues (corn stovers, corn cobs, corn hulls), sorghum (including sweet sorghum) residues, Jatropha seed coats, Jatropha hulls, cashew hulls, switchgrass, Erianthus, high biomass yielding crops, energy crops and the like. Among them, from the viewpoints of easy availability and compatibility to the production method to be applied in the present invention, empty fruit bunches of palm, wheat straws, corn stems and leaves, corn residues, bagasse, cane top, energy cane and residues after extraction of the useful components are preferred and bagasse, cane top and energy cane are more preferred. Here, the useful components mean hemicellulose, saccharides, minerals, water and the like.

Bagasse, cane top and energy cane contain lignin in an amount of 5% by mass or more and 30% by mass or less. Lignin in bagasse, cane top and energy cane contains all of H nucleus, G nucleus and S nucleus as basic skeletons.

The G nucleus is one having one methoxy group (-OCH₃) at the ortho position of a phenol skeleton part, the S nucleus is one having two methoxy groups at the ortho position, and H nuclear is one having no methoxy group at the ortho position. Incidentally, lignin derived from a woody biomass contains no H nucleus.

One kind of the above raw material such as a herbaceous biomass can be used alone or two or more kinds thereof can be used in combination.

### <Separation Step>

In the separation step, the herbaceous biomass that is a raw material is added into a first solvent which is a mixed solvent of water and at least one type of alcohol selected from aliphatic alcohols having 4 to 8 carbon atoms and separates into two phases at 0°C or higher and 50°C or lower, followed by treatment under the following conditions.

The ratio (molar ratio) of the first solvent to the alcohol is 1/1 to 40/1 and further the following conditions are satisfied.
Condition A: the concentration of the raw material to be charged into the mixed solvent is 1% by mass or more and 50% by mass or less,
Condition B: the treatment temperature is 100°C or higher and 350°C or lower, and
Condition C: the treatment time is 0.1 hours or more and 10 hours or less.

In the separation step, there is used a first solvent which is a mixed solvent of water and at least one type of alcohol selected from aliphatic alcohols having 4 to 8 carbon atoms and separates into two phases at 0°C or higher and 50°C or lower. By using the first solvent, lignin is extracted into the alcohol phase which is separated from the first solvent.

A part of the cellulose degradation product, a part of the hemicellulose degradation product and the metals contained in the biomass are extracted into the aqueous phase. Consequently, lignin can be separated through liquid-liquid separation.

According to the separation step, the impurities in the lignin can be reduced. In addition, according to the liquid-liquid separation, the yield of lignin can be increased. Furthermore, according to the liquid-liquid separation, the amount of heat energy to be consumed away in the step of removing the solvent from lignin can be reduced as compared with the separation method of distillation by heating and other methods. Consequently, the step is useful from the viewpoint of carbon offset.

The first solvent usable in the separation step may be any solvent capable of separating into two phases at 0°C or higher and 50°C or lower. For example, the solvent may be a solvent that is in one phase before or during the separation step and thereafter separates or a solvent that separates into two phases by adding water or an alcohol after the separation step.

The alcohol to be used in the first solvent is an aliphatic alcohol having from 4 to 8 carbon atoms and separates from water to be in two phases at 0°C or higher and 50°C or lower. The alcohol to be used as the first solvent may be, for example, a saturated linear alcohol such as 1-butanol, 1-pentanol, 1-hexanol, 1-heptanol, or 1-octanol; and, in addition thereto, may also be an unsaturated linear alcohol. Further, the alcohol to be used as the first alcohol may be a branched aliphatic hydrocarbon alcohol or may be an unsaturated branched alcohol.

Of these alcohols, from the viewpoint of two-phase separation from water at 0°C or higher and 50°C or lower, preferred is one or more selected from the group consisting of 1-butanol, 2-butanol, 2-methyl-1-propanol, 1-pentanol, and 1-hexanol, and particularly preferred is 1-butanol or 2-methyl-1-propanol.

On the other hand, methanol, ethanol and propanol that are aliphatic alcohols having from 1 to 3 carbon atoms are miscible with water at 0°C or higher and 50°C or lower to be in one phase.

Also, for example, in the case of a mixed solvent with an alcohol having a boiling point lower than that of water, lignin can be recovered by removing the alcohol alone from the mixed solvent and precipitating lignin that has dissolved in the alcohol. However, since a part of lignin also dissolves in water, lignin dissolving in water cannot be recovered and the yield thereof decreases. For recovering lignin that has dissolved in water, a large amount of heat energy is consumed away.

Therefore, from the viewpoint of energy loss, a mixed solvent that does not separate into two phases at 0°C or higher and 50°C or lower and is mixed with an alcohol having a boiling point lower than that of water is not suitable as the first solvent in the present embodiment.

Further, in the case where an aliphatic alcohol having 1 to 3 carbon atoms is used as the first solvent, purified lignin having a high softening point is obtained after the later-stage treatment. Since purified lignin is used in a solvent-dissolved state in some cases, it is desirably soluble in a solvent. Moreover, since purified lignin is added to a resin composition and used, it is desirably capable of easily mixing with the resin composition at relatively low temperature. Therefore, the aliphatic alcohol having 1 to 3 carbon atoms is not suitable as the first solvent in the present embodiment.

In the mixed solvent of the first solvent, the molar ratio of water to the alcohol (water/alcohol) is preferably 1/1 to 40/1, more preferably 1.5/1 to 30/1, and even more preferably 2/1 to 24/1. When the ratio of water to the alcohol is more than the above-mentioned range, the solvent does not separate into two phases of water and the alcohol in some cases under the predetermined condition.

Water to be used as the solvent in the embodiment of the present invention includes, for example, tap water, industrial water, ion-exchanged water, distilled water, etc.

The concentration of the raw material to be in the solvent under the condition A is 1% by mass or more and 50% by mass or less, preferably 3% by mass or more and 20% by mass or less, more preferably 5% by mass or more and 15% by mass or less. When the raw material concentration is less than 1% by mass, the amount of energy to be used for heating the solvent and for removing the solvent increases and therefore the energy efficiency in the production process for lignin becomes worse. When the material concentration is more than 50% by mass, the solvent amount is not sufficient and the separation efficiency lowers.

The reaction temperature under the condition B is 100°C or higher and 350°C or lower, preferably 150°C or higher and 300°C or lower, more preferably 170°C or higher and 270°C or lower. When the temperature under the condition B is lower than 100°C, the case is not preferred since the lignin separation hardly proceeds, but when it is higher than 350°C, the case is not preferred since cellulose decomposes and lignin again polymerizes to form coke.

The reaction time under the condition C is 0.1 hours or more and 10 hours or less, preferably 0.2 hours or more and 8 hours or less, more preferably 1 hour or more and 6 hours or less, and even more preferably 1 hour or more and 3 hours or less. When the reaction time under the condition C is less than 0.1 hours, the separation does not fully proceed, but when it is more than 10 hours, cellulose decomposes and the amount of coke to be formed by repolymerization of lignin cannot be suppressed.

In addition to the above-mentioned conditions, it is desirable that the pressure of the reaction system in the separation step is from 0.5 MPa to 30 MPa. More preferred conditions is suitably determined since they are influenced by the amount of water and alcohol and the temperature. The separation step may be carried out in air. It is preferable that the separation step is carried out in an atmosphere where oxygen is reduced through nitrogen purging for the purpose of suppressing polymerization by an oxidation reaction.

The separation mode in the production method according to the embodiment of the present invention is not particularly limited, and static separation is possible. For example, employable is any ordinary batch reactor or semi-batch reactor. Also employable is a mode of performing the separation while extruding a slurry composed of a herbaceous biomass, water and an alcohol by a screw, a pump or the like.

### <Liquid Separation Step>

In the liquid separation step, the alcohol phase is separated at the temperature at which the first solvent separates into two phases. The liquid separation step is carried out after the separation step. In the liquid separation step, after the separation step, the organic phase that contains lignin, the alcohol phase in the present embodiment, is separated from the first solvent at the temperature for two-phase separation. The solvent for use in the liquid separation step may be any one that secures two-phase separation in a temperature range of 0°C or higher and 50°C or lower.

According to the production method for purified lignin, lignin can be obtained by separating the alcohol phase with a separatory funnel or the like. The lignin is kept dissolving in the alcohol phase in the mixed solvent.

In such a manner, according to the production method for purified lignin of the present invention, the first solvent containing lignin can be separated in a mode of liquid-liquid separation, and therefore the heat energy loss in the liquid separation step can be reduced.

### <Removal Step>

In the present embodiment, in the removal step, the alcohol is removed from the alcohol phase that has been separated in the liquid separation step.

Incidentally, in the present embodiment, the state of separating into two phases includes a state that almost all the mixed solvent separates into two phases but the aqueous phase and the alcohol phase are slightly mixed each other. Therefore, the removal step may include a treatment for removing the alcohol from the alcohol phase and a treatment for removing the aqueous phase that is slightly mixed in the alcohol phase.

### <Extraction Step>

In the present embodiment, in the extraction step, purified lignin is extracted by adding a second solvent that is an organic solvent alone or a mixed solvent of the organic solvent and water to the lignin obtained by removing the alcohol from the alcohol phase or optionally removing the alcohol and water and by removing the second solvent from the solution in which the lignin has been dissolved in the second solvent.

The organic solvent usable in the extraction step includes, for example, one alone or an organic solvent of a mixture of two or more selected from the group consisting of tetrahydrofuran, acetone, methyl ethyl ketone, dimethyl ether, diethyl ether, ethyl acetate, dichloromethane, chloroform, acetonitrile, N,N-dimethylformamide, dimethyl sulfoxide, alcohols, toluene, benzene, and aliphatic alkanes. The second solvent may be a mixed solvent of the above organic solvent and water.

The alcohol usable as the second solvent includes methanol, ethanol, propanol and butanol, and among them, methanol and ethanol are preferred. The aliphatic alkane usable as the second solvent includes octane, heptane, hexane, etc., and among them, hexane is preferred.

Among the above-mentioned organic solvents usable as the second solvent, more preferred are one alone or an organic solvent of a mixture of two or more selected from the group consisting of acetone, ethyl acetate, dichloromethane, and alcohols, and the solvent may be a mixed solvent of the above organic solvent and water.

Between the separation step where a herbaceous biomass is treated under the conditions A, B and C while using a mixed solvent in which the blend ratio of water and the alcohol is set in a specific ratio, and the liquid separation step, and between the liquid separation step and the extraction step, there may be provided any other step for removing impurities or for forming purified lignin.

### [Use Applications of Cellulose and Hemicellulose in Production Method for Purified Lignin]

According to the production method for purified lignin of the present invention, lignin can be efficiently extracted from a herbaceous biomass under mild conditions. As a result, a part of cellulose degradation products and a part of hemicellulose degradation products contained in the herbaceous biomass may be dissolved in an aqueous phase and efficiently recovered at high purity. On the other hand, cellulose can be recovered efficiently and at high purity as a solid.

Since the amount of lignin to be contained in cellulose, hemicellulose and degradation products thereof that may be obtained in the production method for purified lignin of the present invention is small, saccharification thereof with acid or enzyme is efficiently realized. Further, from cellulose, hemicellulose and degradation products thereof obtained by the present production method, ethanol, butanol and the like may be produced using known methods.

In addition, from cellulose and hemicellulose according to the present invention, there can be obtained rubber and tire-reinforcing material as substitutes for resin-reinforcing fibers or substitutes for chemical fibers such as cellulose nanofibers, food additives such as carboxymethyl cellulose, oligosaccharides and xylitol, as well as chemical products such as lactic acid, succinic acid and furfural, and thus they are useful.

### Examples

The present invention will be described in more detail below with reference to Examples. The present invention should not be construed as being limited to the following Examples.

### [Production Examples of Purified Lignin]

### Production Example 1

Bagasse as a raw material (sample size: 3 mm × 3 mm square or less) and a mixed solvent (first solvent) prepared in a ratio of water/alcohol shown in Table 1 (represented as "water/organic phase" in Table 1) were put in a SUS (stainless steel)-made batch apparatus (Fig. 1) having an internal volume of 0.92 L. The total amount of the solvent was 315 g. The concentration of the charged raw material was as follows: raw material/solvent=1/10.

The batch reaction apparatus shown in Fig. 1 is provided with a container, a pressure gauge 1 for measuring pressure in the container, a safety valve 2, a nitrogen source 4 for nitrogen substitution (purge) of the inside of the container, a heater 6 that covers the outside of the container to regulate the temperature of the container, a thermocouple 5 for measuring the temperature in the container and a stirring blade 7 for stirring the components in the container, and in order to prevent overheating of the stirrer, a cooling water is allowed to pass through in the direction indicated by 3 in Fig. 1.

The inside of the SUS-made batch apparatus was purged with nitrogen and then heated up to 200°C, and treatment was performed for 2 hours. The treatment time was the lapse time after having reached 200°C. The temperature was measured with the thermocouple.

After the treatment, the SUS-made batch apparatus was cooled, and after the temperature lowered to near room temperature, all the contents therein were taken out. After the treatment, the solid fraction and the liquid phase were separated by filtration. Further, the filtrate were separated into an aqueous phase and an organic phase with a separatory funnel. The solid fraction was stirred in 200 mL of acetone for 20 minutes, and the resultant filtrate was added to the above organic phase.

The organic phase was removed with an evaporator (70°C, water bath), and then dried in vacuo at 125°C for 30 minutes to give lignin.

The resultant lignin was put into a beaker containing therein ethyl acetate (second solvent) (67 mL/g-lignin), and stirred for 20 minutes. After stirring, this was allowed to stand for 10 minutes and then the supernatant was removed through decantation. The supernatant was subjected to suction filtration to remove a minute amount of the solid fraction.

Ethyl acetate (33 mL/g-lignin) was added to the solid fraction having remained in the beaker, and stirred for 20 minutes. After stirring, this was allowed to stand for 10 minutes, and then the supernatant was removed through decantation. The supernatant was subjected to suction filtration to remove a minute amount of the solid fraction.

Ethyl acetate (13 mL/g-lignin) was added to the solid fraction having remained in the beaker, and stirred for 10 minutes. After stirring, this was allowed to stand for 10 minutes, the supernatant was again removed through decantation. The supernatant was subjected to suction filtration to remove a minute amount of the solid fraction.

Ethyl acetate in the resultant supernatant (ethyl acetate-soluble fraction) was removed with an evaporator (60°C, water bath), and then dried in vacuo under conditions of 150°C and 30 minutes to give purified lignin.

### Production Example 2

Purified lignin was obtained by the same operations as in Production Example 1 except that 2-methyl-1-propanol was used as an organic solvent for the mixed solvent.

### Production Example 3

Purified lignin was obtained by the same operations as in Production Example 1 except that 1-hexanol was used as an organic solvent for the mixed solvent.

### Production Example 4

Purified lignin was obtained by the same operations as in Production Example 1 except that 1-octanol was used as an organic solvent for the mixed solvent.

### Production Example 5

Purified lignin was obtained by the same operations as in Production Example 1 except that the water/1-butanol ratio in the mixed solvent was changed to 2/1.

### Production Example 6

Purified lignin was obtained by the same operations as in Production Example 1 except that the water/1-butanol ratio in the mixed solvent was changed to 8/1.

### Production Example 7

Purified lignin was obtained by the same operations as in Production Example 1 except that the water/1-butanol ratio in the mixed solvent was changed to 24/1.

### Production Example 8

Purified lignin was obtained by the same operations as in Production Example 1 except that the water/1-butanol ratio in the mixed solvent was changed to 40/1.

### Production Example 9

The same separation as in Production Example 1 was performed except that the water/1-butanol ratio in the mixed solvent was changed to 1/1. After the separation treatment, the solid fraction and the liquid phase were separated in a mode of solid-liquid separation through filtration. The solid fraction was washed with 200 mL of water, and the resultant wash was added to the filtrate. As a result, water and 1-butanol were separated into two phases, and the 1-butanol phase was recovered through liquid-liquid separation. The solid fraction was stirred in 200 mL of acetone for 20 minutes, and then subjected to solid-liquid separation, and the resultant filtrate was added to the aforementioned filtrate. Butanol was removed with an evaporator (70°C, water bath), then vacuum drying was performed under conditions of 125°C and 30 minutes, and purified lignin was obtained through an ethyl acetate extraction step in the same manner as in Production Example 1.

### Comparative Production Example 1

Purified lignin was obtained by performing the same operations as in Production Example 1 except that cedar was used as a raw material and the water/1-butanol ratio in the mixed solvent was changed to 8/1.

### Comparative Production Example 2

The same separation treatment as in Production Example 1 was performed except that ethanol was used as an organic solvent for the mixed solvent. After the separation treatment, the solid fraction and the liquid phase were separated in a mode of solid-liquid separation through filtration. The solid fraction was stirred in 200 mL of acetone for 20 minutes, and then subjected to solid-liquid separation, and the resultant filtrate was added to the previous filtrate. A solid fraction formed by removing the organic solvent with evaporator was separated in a mode of solid-liquid separation through filtration, then vacuum drying was performed under conditions of 125°C and 30 minutes, and purified lignin was obtained through an ethyl acetate extraction step in the same manner as in Production Example 1.

### Comparative Production Example 3

Purified lignin was obtained by performing the same operations as in Comparative Production Example 2 except that acetone was used as an organic solvent for the first solvent.

### [Evaluation Methods for Resultant Extract]

### <Softening Point>

The softening point of each of the extracts obtained in Production Examples 1 to 9 and Comparative Production Examples 1 to 3 was measured using a testing machine according to a ring and ball method in accordance with JIS K2207. The results are shown in Table 1.

### <Moldability>

After 85 parts by mass of each of the extracts obtained in Production Examples 1 to 9 and Comparative Production Examples 1 to 3, 15 parts by mass of hexamethylenetetramine, and 40 parts by mass of an inorganic filler were put in a mortar and mixed at room temperature while pulverization, miscibility when mixed at 100°C using an open roll kneader was evaluated based on the following indices. The results are shown in Table 1.

A: easy to mix, B: difficult to mix (require a time for homogeneous mixing), C: impossible to mix

**Table 1**

| | | Production Example | | | | | | | | | Comparative Production Example | | |
|---|---|---|---|---|---|---|---|---|---|---|---|---|---|
| | | 1 | 2 | 3 | 4 | 5 | 6 | 7 | 8 | 9 | 1 | 2 | 3 |
| Raw material | | bagasse | bagasse | bagasse | bagasse | bagasse | bagasse | bagasse | bagasse | bagasse | cedar | bagasse | bagasse |
| First solvent | Organic phase | 1-butanol | 2-methyl-1-propanol | 1-hexanol | 1-octanol | 1-butanol | 1-butanol | 1-butanol | 1-butanol | 1-butanol | 1-butanol | ethanol | acetone |
| | Water/organic phase (molar ratio) | 4/1 | 4/1 | 4/1 | 4/1 | 2/1 | 8/1 | 24/1 | 40/1 | 1/1 | 8/1 | 4/1 | 4/1 |
| Evaluation results | Softening point (°C) | 105 | 110 | 125 | 125 | 115 | 115 | 125 | 125 | 100 | 120 | >150 | 130 |
| | Moldability | A | A | A | A | A | A | A | A | A | A | C | B |

### [Evaluation of Properties of Purified Lignin]

For three types selected from the obtained purified lignins, properties thereof were evaluated. Evaluation items and methods are as described below. The results are shown in Table 2. Incidentally, the evaluation results of softening ability and the evaluation results of moldability shown in Table 1 are also shown.

### <Phenolic Hydroxyl Group Content and Alcoholic Hydroxyl Group Content>

Purified Lignins 1 to 3 have both a phenolic hydroxyl group and an alcoholic hydroxyl group. The phenolic hydroxyl group content and the alcoholic hydroxyl group content of each of the purified lignins 1 to 3 were measured by the following method.

A solvent obtained by mixing deuterated chloroform, pyridine and cyclohexanol (internal standard) was added to purified lignin, and 2-chloro-4,4,5,5-tetramethyl-1,3,2-dioxaphospholane as a derivatization reagent was further added thereto, followed by heating at 50°C for 1 hour. Thereafter, ³¹PNMR measurement was carried out under the following measurement conditions.
- Pulse width: 30°
- Repeating time: 2 seconds
- Measurement range: -60 to 200 ppm
- Integration times: 200 times

A signal derived from cyclohexanol that is internal standard being 145.2ppm, a range of 150.0 to 145.5 ppm was attributed to aliphatic hydroxyl groups (alcoholic hydroxyl groups) (Alc-OH) and a range of 144.7 to 136.6 ppm was attributed to aromatic hydroxyl groups (phenolic hydroxyl groups) (Ph-OH). Then, the alcoholic hydroxyl group content (mol/g) and the phenolic hydroxyl group content (mol/g) were calculated from integrated values.

### <Weight-Average Molecular Weight>

The weight-average molecular weight of the purified lignin was measured on a gel permeation chromatograph (GPC) using a tetrahydrofuran solvent (measurement temperature: 40°C, detector: RI). The weight-average molecular weight is a weight-average molecular weight in terms of polystyrene.

### <Melt Viscosity>

Using a rheometer (Anton Paar, Inc. MCR301) apparatus, the viscosity was measured by the parallel plate method (φ=25 mm, gap: 1mm) at a temperature of 140°C at a shear rate of 0.1 s⁻¹.

**Table 2**

| | Purified lignin 1 | Purified lignin 2 | Purified lignin 3 |
|---|---|---|---|
| Production method | Production Example 1 | Production Example 7 | Comparative Production Example 1 |
| Raw material | bagasse | bagasse | cedar |
| Phenolic hydroxyl group content (mol/g) | 3.98×10⁻³ | 4.02×10⁻³ | 4.42×10⁻³ |
| Alcoholic hydroxyl group content (mol/g) | 8.12×10⁻⁴ | 8.32×10⁻⁴ | 1.14×10⁻³ |
| Weight-average molecular weight in terms of polystyrene | 1261 | 1049 | 1390 |
| Softening point (°C) | 105 | 125 | 120 |
| Moldability | A | A | A |
| Melt viscosity (P) | 75 | 105 | 103 |

### [Evaluation of Thermosetting Resin Compositions Containing Hexamethylenetetramine]

A thermosetting resin composition was prepared using each of the three types of purified lignins used in the above property evaluation. Further, a cured product thereof was prepared and physical properties were evaluated.

### <Formulation of Thermosetting Resin Composition and Molding Method of Cured Product>

The components were put into a mortar at a blending ratio shown in Table 3, pulverized at room temperature, and after mixing, were mixed at 100°C for 5 minutes using an open roll kneader, followed by cooling to room temperature. The mixture was pulverized in a mortar, sandwiched between aluminum plates coated with a release agent, and molded at 150°C for 60 minutes under reduced pressure using a vacuum press machine. After molding, curing was performed at 200°C for 120 minutes to give a molded article.

### <Measurement Method of Bending Strength>

A sample having a size of 5 mm×50 mm×1 mm was cut out from the obtained molded article and bending strength was measured under conditions of 3-point bending mode, a span of 30 mm, and a rate of 2 mm/minute using Instron 5566.

### <Measurement Method of Glass Transition Temperature>

The measurement of the glass transition temperature was measured by a solid viscoelastic method. A sample having a size of 5 mm×30 mm×1 mm was cut out from the obtained molded article and the measurement was performed at 0°C to 300°C or until reaching limited lowest elastic modulus at a temperature-elevating rate of 2°C/minute at 1 Hz using DMA8000 (manufactured by Perkin Elmer Japan Co., Ltd.). A peak temperature of tanδ obtained was taken as glass transition temperature (Tg).

**Table 3**

| | | Example | | | | | | Comparative Example | |
|---|---|---|---|---|---|---|---|---|---|
| | | 1 | 2 | 3 | 4 | 5 | 6 | 1 | 2 |
| Blend formulation (parts by mass) | Purified lignin 1^{*1} | 85 | 55 | 0 | 85 | 90 | 70 | 0 | 0 |
| | Purified lignin 2^{*2} | 0 | 0 | 85 | 0 | 0 | 0 | 0 | 0 |
| | Purified lignin 3^{*3} | 0 | 0 | 0 | 0 | 0 | 0 | 85 | 85 |
| | Phenol resin^{*4} | 0 | 30 | 0 | 0 | 0 | 0 | 0 | 0 |
| | Hexamethylenetetramine | 15 | 15 | 15 | 15 | 10 | 30 | 15 | 15 |
| | Inorganic filler 1^{*5} | 0 | 0 | 0 | 40 | 0 | 0 | 0 | 40 |
| Evaluation results | Bending strength (MPa) | 135 | 141 | 137 | 225 | 130 | 139 | 112 | 210 |
| | Glass transition temperature (°C) | 262 | 259 | 263 | 264 | 252 | 265 | 252 | 255 |

| | | | | | | | | | |
|---|---|---|---|---|---|---|---|---|---|
| *1 Purified lignin 1: purified lignin obtained under conditions of Production Example 1 *2 Purified lignin 2: purified lignin obtained under conditions of Production Example 7 *3 Purified lignin 3: purified lignin obtained under conditions of Comparative Production Example 1 *4 Phenol resin: PR-53195 (manufactured by Sumitomo Bakelite Co., Ltd.) *5 Inorganic filler 1: glass fiber CS3E479S (manufactured by Nitto Boseki Co., Ltd.) | | | | | | | | | |

### <Results>

It is found that purified lignin is easily obtained by the method described in Production Examples 1 and 7 and Comparative Production Example 1, that is, by treating a raw material biomass in a mixed solvent of water and 1-butanol under specific conditions, subsequently adding ethyl acetate to lignin obtained by removing 1-butanol from the mixed solvent, and removing the ethyl acetate from the solution in which lignin has been dissolved in ethyl acetate.

Further, as is seen when Examples 1 and 3 and Comparative Example 1 are compared, it is found that the cured product of the thermosetting resin composition containing purified lignin 1 or 2 derived from bagasse is more excellent in bending strength and glass transition temperature of the molded article than the cured product of the thermosetting resin composition containing purified lignin 3 derived from cedar when the blending ratio is the same. Moreover, also in the case where an inorganic filler is used, similarly, it is found that the cured product of the thermosetting resin composition containing purified lignin 1 or 2 derived from bagasse is further more excellent in bending strength and glass transition temperature of the molded article.

Therefore, the cured product of the thermosetting resin composition containing purified lignin 1 or 2 derived from bagasse is more excellent in bending strength and glass transition temperature of the molded article than the cured product of the thermosetting resin composition containing purified lignin 3 derived from cedar.

### [Evaluation of Thermosetting Resin Composition Containing Epoxy Compound]

A thermosetting resin composition was prepared using each of the three types of purified lignins used in the above property evaluation. Further, a cured product thereof was prepared and physical properties were evaluated.

### <Formulation of Thermosetting Resin Composition and Molding Method of Cured Product>

The respective components were put into a mortar at a blending ratio shown in Table 4, pulverized at room temperature, and after mixing, mixed at 100°C for 5 minutes using an open roll kneader, followed by cooling to room temperature. The mixture was pulverized in a mortar, sandwiched between aluminum plates coated with a release agent, and molded at 150°C for 60 minutes under reduced pressure using a vacuum press machine. After molding, curing was performed at 200°C for 120 minutes to give a molded article.

### <Measurement Method of Bending Strength>

The bending strength was measured by the above-mentioned method.

### <Measurement Method of Glass Transition Temperature>

The glass transition temperature was measured by the above-mentioned method.

**Table 4**

| | | Example | | | | | | | | Comparative Example | | | |
|---|---|---|---|---|---|---|---|---|---|---|---|---|---|
| | | 11 | 12 | 13 | 14 | 15 | 16 | 17 | 18 | 12 | 13 | 14 | 15 |
| Blend formulation (parts by mass) | Purified lignin 1^{*11} | 54 | 60 | 0 | 46 | 55 | 54 | 30 | 80 | 0 | 0 | 0 | 0 |
| | Purified lignin 2^{*12} | 0 | 0 | 60 | 0 | 0 | 0 | 0 | 0 | 0 | 0 | 0 | 0 |
| | Purified lignin 3^{*13} | 0 | 0 | 0 | 0 | 0 | 0 | 0 | 0 | 54 | 58 | 44 | 55 |
| | Phenol resin^{*14} | 0 | 0 | 0 | 0 | 0 | 0 | 15 | 0 | 0 | 0 | 0 | 0 |
| | Epoxy resin 1^{*15} | 0 | 0 | 0 | 0 | 45 | 0 | 0 | 0 | 0 | 0 | 0 | 45 |
| | Epoxy resin 2^{*16} | 46 | 40 | 40 | 54 | 0 | 46 | 55 | 20 | 46 | 42 | 56 | 0 |
| | Curing accelerator^{*17} | 1 | 1 | 1 | 1 | 1 | 1 | 1 | 1 | 1 | 1 | 1 | 1 |
| | Inorganic filler 2^{*18} | 0 | 0 | 0 | 0 | 0 | 40 | 0 | 0 | 0 | 0 | 0 | 0 |
| Blend properties | Phenolic hydroxyl group content (mol) | 0.21 | 0.24 | 0.24 | 0.18 | 0.22 | 0.22 | 0.26 | 0.32 | 0.24 | 0.26 | 0.19 | 0.24 |
| | Epoxy group content (mol) | 0.21 | 0.19 | 0.19 | 0.25 | 0.24 | 0.21 | 0.26 | 0.09 | 0.21 | 0.20 | 0.26 | 0.24 |
| | Phenolic hydroxyl group/epoxy group | 1.0 | 1.3 | 1.3 | 0.7 | 0.9 | 1.0 | 1.0 | 3.4 | 1.1 | 1.3 | 0.7 | 1.0 |
| Evaluation results | Bending strength (MPa) | 156 | 141 | 134 | 140 | 130 | 254 | 130 | 120 | 141 | 130 | 131 | 121 |
| | Glass transition temperature (°C) | 192 | 175 | 178 | 177 | 135 | 198 | 135 | 155 | 179 | 160 | 162 | 125 |

Details of the components in Table 4 are as follows.

Incidentally, the phenolic hydroxyl group content of the phenol resin and the epoxy group content of the epoxy resin are all catalog values of respective manufacturers.
*11 Purified lignin 1: purified lignin obtained under conditions of Production Example 1
*12 Purified lignin 2: purified lignin obtained under conditions of Production Example 7
*13 Purified lignin 3: purified lignin obtained under conditions of Comparative Production Example 1
*14 Phenol resin: "PR-53195" manufactured by Sumitomo Bakelite Co., Ltd. (phenolic hydroxyl group content: 9.52×10⁻³ mol/g)
*15 Epoxy resin 1: "iER 828" manufactured by Mitsubishi Chemical Corporation (epoxy group content: 5.26×10⁻³ mol/g)
*16 Epoxy resin 2: "EPICLON N695" manufactured by DIC Corporation (epoxy group content: 4.65×10⁻³ mol/g)
*17 Curing accelerator: "Curezol 2PZ-CN" manufactured by Shikoku Chemicals Corporation
*18 Inorganic filler 2: glass fiber "JAFT591" manufactured by Asahi Fiber Glass Co., Ltd.

### <Results>

As is seen when Example 11 is compared with Comparative Example 12 and when Examples 14 and 15 are compared with Comparative Examples 14 and 15, it is found that the cured product of the thermosetting resin composition using purified lignin derived from bagasse is more excellent in bending strength and glass transition temperature of the molded article than the cured product of the thermosetting resin composition using purified lignin derived from cedar when the blending ratio is the same.

### [Evaluation of Thermosetting Resin Composition Containing Isocyanate Compound]

A thermosetting resin composition was prepared using each of the three types of purified lignins used in the above property evaluation. Further, a cured product thereof was prepared and physical properties were evaluated.

### <Formulation of Thermosetting Resin Composition and Molding Method of Cured Product>

The respective components were put into a mortar at a blending ratio shown in Table 5, pulverized at room temperature, and after mixing, mixed at 100°C for 5 minutes using an open roll kneader, followed by cooling to room temperature. The mixture was pulverized in a mortar, sandwiched between aluminum plates coated with a release agent, and molded at 100°C for 60 minutes under reduced pressure using a vacuum press machine. After molding, curing was performed at 150°C for 60 minutes to give a molded article.

### <Measurement Method of Glass Transition Temperature>

The glass transition temperature was measured by the above-mentioned method.

**Table 5**

| | | Example | | | | | Comparative Example | | |
|---|---|---|---|---|---|---|---|---|---|
| | | 21 | 22 | 23 | 24 | 25 | 21 | 22 | 23 |
| Blend formulation (parts by mass) | Purified lignin 1^{*21} | 62 | 65 | 0 | 50 | 62 | 0 | 0 | 0 |
| | Purified lignin 2^{*22} | 0 | 0 | 65 | 0 | 0 | 0 | 0 | 0 |
| | Purified lignin 3^{*23} | 0 | 0 | 0 | 0 | 0 | 60 | 50 | 60 |
| | Phenol resin^{*24} | 0 | 0 | 0 | 12 | 0 | 0 | 10 | 0 |
| | Isocyanate^{*25} | 38 | 35 | 35 | 38 | 38 | 40 | 40 | 40 |
| | Curing accelerator^{*26} | 1 | 1 | 1 | 1 | 1 | 1 | 1 | 1 |
| | Aminosilane^{*27} | 0 | 0 | 0 | 0 | 0.5 | 0 | 0 | 0.5 |
| | Inorganic filler 3^{*28} | 0 | 0 | 0 | 0 | 30 | 0 | 0 | 30 |
| Blend properties | Total of phenolic hydroxyl group content and alcoholic hydroxyl group content (mol) | 0.29 | 0.31 | 0.32 | 0.35 | 0.30 | 0.33 | 0.37 | 0.33 |
| | Isocyanate group content (mol) | 0.30 | 0.28 | 0.28 | 0.30 | 0.30 | 0.32 | 0.32 | 0.32 |
| | Total of hydroxyl group/isocyanate group | 0.98 | 1.1 | 1.1 | 1.2 | 0.98 | 1.0 | 1.2 | 1.0 |
| Evaluation results | Glass transition temperature (°C) | 132 | 129 | 131 | 125 | 133 | 112 | 115 | 113 |

Details of the components in Table 5 are as follows.

Incidentally, the phenolic hydroxyl group content of the phenol resin and the isocyanate group content of the isocyanate are all catalog values of respective manufacturers. Further, since the phenol resin has a phenolic hydroxy group but does not have an alcoholic hydroxyl group, the alcoholic hydroxyl group content in "Total of phenolic hydroxyl group content and alcoholic hydroxyl group content (mol)" shown in Table 5 is all derived from purified lignin.
*21 Purified lignin 1: purified lignin obtained under conditions of Production Example 1
*22 Purified lignin 2: purified lignin obtained under conditions of Production Example 7
*23 Purified lignin 3: purified lignin obtained under conditions of Comparative Production Example 1
*24 Phenol resin: "PR-53195" manufactured by Sumitomo Bakelite Co., Ltd. (phenolic hydroxyl group content: 9.52×10⁻³ mol/g)
*25 Isocyanate: 4,4'-diphenylmethane diisocyanate reagent (isocyanate group content: 8.00×10⁻³ mol/g)
*26 Curing accelerator: dibutyltin(IV) dilaurate reagent
*27 Aminosilane: γ-aminopropyltriethoxysilane "SH6020" manufactured by Dow Corning Toray Co., Ltd.
*28 Inorganic filler 3: fused silica "FD940" manufactured by Denka Company Limited

### <Results>

It is found that the cured product of the thermosetting resin composition using purified lignin derived from cedar has a glass transition temperature lower than that of the cured product of the thermosetting resin composition using purified lignin derived from bagasse.

## Claims

1. A thermosetting resin composition comprising:
purified lignin obtained by treating a herbaceous biomass as a raw material under the following conditions in a first solvent that is a mixed solvent of water and at least one type of alcohol selected from aliphatic alcohols having 4 to 8 carbon atoms, subsequently removing the alcohol from the alcohol phase that is separated at the temperature at which the first solvent separates into two phases to give lignin, adding a second solvent that is an organic solvent alone or a mixed solvent of the organic solvent and water to the resultant lignin, and removing the second solvent from the solution in which the lignin is dissolved in the second solvent and
a lignin-reactive compound that has a functional group capable of reacting with the purified lignin;
Condition A: the concentration of the raw material to be charged into the mixed solvent is 1% by mass or more and 50% by mass or less,
Condition B: the treatment temperature is 100°C or higher and 350°C or lower, and
Condition C: the treatment time is 0.1 hours or more and 10 hours or less.

2. The thermosetting resin composition according to claim 1, wherein the softening point of the purified lignin is lower than 130°C.

3. The thermosetting resin composition according to claim 1 or 2, wherein the lignin-reactive compound is hexamethylenetetramine, and the purified lignin is contained in an amount of 50% by mass or more and 98% by mass or less on the basis of the total mass of the thermosetting resin composition and the hexamethylenetetramine is contained in an amount of 2% by mass or more and 50% by mass or less on the basis of the total mass of the thermosetting resin composition.

4. The thermosetting resin composition according to claim 3, wherein a phenol resin is further contained, a resin mixture containing the purified lignin in an amount of 10% by mass or more and 90% by mass or less and the phenol resin in an amount of 10% by mass or more and 90% by mass or less is contained in an amount of 50% by mass or more and 98% by mass or less on the basis of the total mass of the thermosetting resin composition, and the hexamethylenetetramine is contained in an amount of 2% by mass or more and 50% by mass or less on the basis of the total mass of the thermosetting resin composition.

5. The thermosetting resin composition according to claim 1 or 2, wherein the lignin-reactive compound is an epoxy resin, and the equivalent ratio of the phenolic hydroxyl groups in the purified lignin to the epoxy groups in the epoxy resin (phenolic hydroxyl groups/epoxy groups) is 0.7 or more and 1.3 or less.

6. The thermosetting resin composition according to claim 5, wherein a phenol resin is further contained, and the equivalent ratio of the total of the phenolic hydroxyl groups in a resin mixture containing the purified lignin in an amount of 10% by mass or more and 90% by mass or less and the phenol resin in an amount of 10% by mass or more and 90% by mass or less to the epoxy groups in the epoxy resin (total of the phenolic hydroxyl groups/epoxy groups) is 0.7 or more and 1.3 or less.

7. The thermosetting resin composition according to claim 5 or 6, wherein a curing accelerator is contained in an amount of 0.1 parts by mass or more and 10 parts by mass or less relative to 100 parts by mass of the thermosetting resin composition.

8. The thermosetting resin composition according to claim 1 or 2, wherein the lignin-reactive compound is an isocyanate compound, and the equivalent ratio of the total of the phenolic hydroxyl groups and the alcoholic hydroxyl groups in the purified lignin to the isocyanate groups in the isocyanate compound (total of phenolic hydroxyl groups and alcoholic hydroxyl groups/isocyanate groups) is 0.8 or more and 1.2 or less.

9. The thermosetting resin composition according to claim 8, wherein a phenol resin is further contained, and the equivalent ratio of the total of the phenolic hydroxyl groups and the alcoholic hydroxyl groups in a resin mixture containing the purified lignin in an amount of 10% by mass or more and 90% by mass or less and the phenol resin in an amount of 10% by mass or more and 90% by mass or less to the isocyanate groups in the isocyanate compound (total of phenolic hydroxyl groups and alcoholic hydroxyl groups/isocyanate groups) is 0.8 or more and 1.2 or less.

10. The thermosetting resin composition according to any one of claims 1 to 9, wherein at least one selected from the group consisting of inorganic fillers and organic fillers is further contained.

11. The thermosetting resin composition according to any one of claims 1 to 10, wherein the herbaceous biomass is at least one selected from the group consisting of bagasse, cane top, and energy cane.

12. The thermosetting resin composition according to any one of claims 1 to 11, wherein the aliphatic alcohol is at least one selected from the group consisting of 1-butanol, 2-butanol, and 2-methyl-1-propanol.

13. The thermosetting resin composition according to any one of claims 1 to 12, wherein the molar ratio of water to the alcohol in the mixed solvent of the first solvent (water/alcohol) is from 1/1 to 40/1.
